# EUROPÄISCHE PATENTSCHRIFT

(11) **EP 0 881 461 B1**
(45) Veröffentlichungstag und Bekanntmachung des Hinweises auf die Patenterteilung: **13.08.2003**
(21) Anmeldenummer: 98107414.9
(22) Anmeldetag: 23.04.1998
(51) Int. Cl.: G01B 11/00

(54) **Anlage zur messtechnischen räumlichen 3D-Lageerfassung von Oberflächenpunkten**
System for the metrological spatial 3D detection of surface points
Système pour la détection metrologique spatiale à 3D des points d'une surface

(30) Priorität: 26.05.1997 DE 19721903
(43) Veröffentlichungstag der Anmeldung: 02.12.1998
(73) Patentinhaber: AICON 3D Systems GmbH, 38114 Braunschweig (DE); DaimlerChrysler AG, 70567 Stuttgart (DE)
(72) Erfinder: Schick, Jens, Dr., 71083 Herrenberg (DE); Bösemann, Werner, Dr., 38106 Braunschweig (DE)
(74) Vertreter: Gramm, Werner, Prof. Dipl.-Ing.

(56) Entgegenhaltungen:
- EP-A- 0 144 546
- GB-A- 2 259 823
- US-A- 4 753 569

## Beschreibung

Die Erfindung betrifft eine Anlage zur meßtechnischen räumlichen 3D-Lageerfassung von Oberflächenpunkten eines zu vermessenden Objektes (Meßobjekt) in einem photogrammetrischen Onlinesystem.

Bei einem photogrammetrischen Offlinesystem wird das Meßobjekt von einem die Kamera frei haltenden Benutzer aus verschiedenen Richtungen aufgenommen. Dabei sind die Meßpunkte zuvor physikalisch auf der Oberfläche zu signalisieren. In einem späteren Äuswerteschritt werden dann für diese signalisierten Meßpunkte die 3D-Koordinaten berechnet.

Das photogrammetrische Offlinesystem besitzt den Nachteil, dass die Meßpunkte physikalisch signalisiert werden müssen. Dies erfordert einen erheblichen Zeitaufwand. Nachteilig ist ferner, dass die 3D-Koordinaten der Meßpunkte zeitlich erst wesentlich später vorliegen als die eigentliche Aufnahme des Meßobjektes. Dies ist dadurch bedingt, daß Bilder aufgenommen werden müssen, die erst später im Rechner weiterverarbeitet werden können.

Zur Koordinatenbestimmung in nur einer Ebene oder in nur einer Richtung offenbart die DE 195 14 815 A1 eine Koordinaten-Meßeinrichtung mit einem auf einer Führungseinheit entlang eines Maßstabs auf einem Schlitten verfahrbaren Meßkopf und mit einem Taster zum Vermessen eines Werkstückes. Der Taster ist an einem Schwenkkörper befestigt, der um einen Drehpunkt verschwenkbar an einem auf der Führungseinheit verfahrbaren Schlitten angeordnet ist. An dem Schwenkkörper sind beidseitig des Drehpunktes dem Maßstab zugeordnete Meßköpfe in Abstand zum Maßstab und zum Drehpunkt angeordnet und zwar derart, dass beim Messen der Schwenkkörper parallel zum Maßstab verschoben wird, wobei zur groben Positionierung eine Koordinate als Maß in Längsrichtung des Maßstabs erfasst und ausgewertet wird. Nach einem Anlegen des Tasters an die Oberfläche des Werkstücks erfolgt ein Verschwenken des Schwenkkörpers um seinen Drehpunkt. Zur Feinpositionierung wird eine Koordinate rechtwinklig zur Oberfläche des Maßstabs als Maß für den Abstand der Meßköpfe vom Maßstab erfasst und ausgewertet. Die Meßköpfe sind dabei als Meßkameras ausgebildet, in denen definierte Markierungen des Maßstabes mit Hilfe eines optischen Systems auf eine von einer CCD-Zeile gebildete Bildebene projiziert werden. Aus den Meßsignalen werden die Lage und die Höhe des Projektionszentrums der Meßköpfe mit Hilfe eines Rechners bestimmt.

Der US 5,440,392 lässt sich ein photogrammetrisches Onlinesystem entnehmen, bei dem ein jeweils zu vermessender Oberflächenpunkt (Meßpunkt) mit einer Tasterspitze eines Tasters mechanisch angetastet, dann die räumliche 3D-Lage der Tasterspitze mit Antastzeitpunkt in bezug auf ein Referenzsystem unter Verwendung zumindest einer elektronischen Kamera ermittelt und ermittelte 3D-Raumkoordinaten datenmäßig festgehalten werden. Hierzu müssen bisher üblicherweise zumindest zwei Kameras auf einem Stativ oder einer ähnlichen Vorrichtung fest installiert werden, die das Meßobjekt beobachten. Die Meßpunkte auf diesem Meßobjekt werden von einem Benutzer mit einem mechanischen Taster angetastet, auf dem sich Meßmarken befinden. Die Koordinaten dieser Meßmarken werden automatisch ermittelt und damit auch die Position der Meßspitze und somit die Koordinaten des Meßpunktes.

Der wesentliche Nachteil dieses Onlinesystems ist darin zu sehen, daß die Kameras während der gesamten Zeit ortsfest stabil aufgebaut sein müssen, und dass die Kameras nur ein limitiertes Meßvolumen zulassen, nämlich nur den Bereich, der zumindest von zwei Kameras abgedeckt wird. Bei dem heutigen Stand der Technik ist dieser Bereich nur ca. 1 m² groß, wenn Genauigkeiten im Bereich kleiner 1/10 mm erreicht werden sollen. Da dieses Meßvolumen in der Praxis häufig nicht ausreicht, müssen die Kameras in ihrer Position versetzt werden, um z.B. bei einem durch ein Fahrzeug gebildeten Meßobjekt einen weiteren Meßvolumenbereich erfassen zu können. Dieses Umsetzen der Kameras erfordert jedoch jeweils eine vollständige Naukalibrierung des Systems und ist somit besonders zeitaufwendig.

Der US 4,753,569 lässt sich eine Anlage zum Kalibrieren von Industrierobotern entnehmen. Dabei geht es um den Abgleich der Raumlage des Bewegungsprogramms innerhalb des Arbeitsvolumens des Industrieroboters in Relation zu einem räumlich absolut vorgegebenen Bezugspunkt oder eines Referenzsystems (auch "Nullsetzen" genannt). Bezugspunkt des Bewegungsprogramms des Industrieroboters ist ein virtueller Punkt am Arbeitsende des Roboterarmes; dieser virtuelle Punkt wird ermittelt und gegebenenfalls korrigiert. In einem Ausführungsbeispiel sind an dem Handgelenk des Roboterarmes zwei Kameras ortsfest angeordnet, deren optische Achsen auf den Tool-Center-Point des Handgelenks ausgerichtet sind. Die Kameras sind mit einem Photodiodenaray als lichtempfindliches Organ ausgestattet. Vorgesehen sind mehrere von den Kameras erfassbare, durch eine Lampe beleuchtete Tafeln, die jeweils vier optisch deutlich wahrnehmbare Orientierungspunkte aufweisen, deren absolute und relative Lage zueinander bekannt sind. Die Oritientierungstafeln liegen in einer Horizontalebene und/oder lotrechten Ebenen.

Die EP-A-O 144 546 offenbart eine Mehrkoordinaten-Meßmaschine mit interferometrischer Erfassung des Verschiebewegs in den Meßachsen. Für jede Meßachse ist mindestens ein Interferometerkopf vorgesehen, der aus Strahlteiler, Referenzspiegel und photoelektrischem Detektor besteht. Versorgt werden die Interferometerköpfe über Monomodefasern von einem einzigen, feststehenden Lasergeneratorhaus.

Der Erfindung liegt die Aufgabe zugrunde, die eingangs beschriebene Anlage so zu verbessern, dass sich bei gleichbleibender Meßgenauigkeit auch große Meßvolumina mit geringem Meßaufwand vermessen lassen.

Diese Aufgabe wird durch eine Anlage mit den Merkmalen des Anspruchs 1 gelöst.

Mit der erfindungsgemäßen Lösungen lassen sich letztlich beliebig große Meßvolumina mit gleichbleibender Meßgenauigkeit erfassen. Das Meßvolumen ist nicht mehr durch die Position und Aufnahmerichtung von Kameras begrenzt, sondern von dem durch den Target-Himmel überspannten Volumen. Dieser Target-Himmel kann auch durch eine gesamte, mit Referenzpunkten ausgerüstete Produktionshalle sein, so dass sich an jedem beliebigen Ort innerhalb dieser Produktionshalle die 3D-Koordinaten mit der erfindungsgemäßen Anlage bestimmen lassen.

Bei allen Lösungen ist die Bestimmung der Referenzpunkte nur einmal bei Aufstellung oder bei Einrichtung des Systems erforderlich. Wesentlich ist dabei, dass die in ihrer räumlichen Lage bekannten Referenzpunkte innerhalb der Meßgenauigkeit während der Messung invariant sind. Ferner müssen die Referenzpunkte so beschaffen sein, dass mit ihrer Erkennung trotz ihrer flächenmäßigen Ausdehnung auf der Targetfläche jedem Referenzpunkt eindeutig mit der gewünschten Meßgenauigkeit ein Lagepunkt zugeordnet werden kann.

Der erfindungsgemäße Meßtaster bietet gegenüber den bisher bekannten Verfahren auch insoweit eine kostengünstige Alternative, als die erfindungsgemäß erzielbare Genauigkeit nicht nur durch hohe Sensorauflösungen erzielbar, sondern bereits mit Standard-CCD-Kameras realisiert werden kann.

Die Oberflächenvermessung kann mit der erfindungsgemäßen Anlage grundsätzlich mit nur einer einzigen Kamera durchgeführt werden. Vorzugsweise ist der Taster jedoch mit drei elektronischen Kameras bestückt, die - bezogen auf eine Umfangslinie um die Tasterachse - umfangsversetzt angeordnet sind, wobei die optische Achse jeder Kamera mit der Tasterachse einen spitzen Winkel von jeweils vorzugsweise 25° einschließt.

Eine laufende Kalibrierung während der Messung setzt das Erkennen von drei Referenzpunkten in jeder Kamera voraus. Sollte eine derartige Kalibrierung während einer laufenden Messung aufgrund eines ausreichend starren Meßtasteraufbaus nicht erforderlich sei, genügt das Erkennen von zwei Referenzpunkten je Kamera. Die Kalibrierung könnte dann einmal täglich oder aber vor jeder Meßaufgabe in einer gesonderten Kalibrierstation vorgenommen werden.

Die Tasterspitze ist vorzugsweise auswechselbar in den Taster eingesetzt. So lassen sich unterschiedlich lange Tasterspitzen mit gegebenenfalls unterschiedlicher Form verwenden. Abgewinkelte Tasterspitzen sind zweckmäßig, wenn die Meßpunkte nicht direkt zugänglich sind.

Weitere Merkmale der Erfindung sind Gegenstand der Unteransprüche und werden mit weiteren Vorteilen der Erfindung anhand eines Ausführungsbeispieles näher erläutert.

In der Zeichnung ist eine als Beispiel dienende Ausführungsform der Erfindung schematisch dargestellt. Es zeigen:
- **Figur 1**: eine Anlage zur meßtechnischen Lageerfassung von Oberflächenpunkten eines Meßobjektes und
- **Figur 2**: in vergrößertem Maßstab den in Figur 1 angedeuteten Taster.

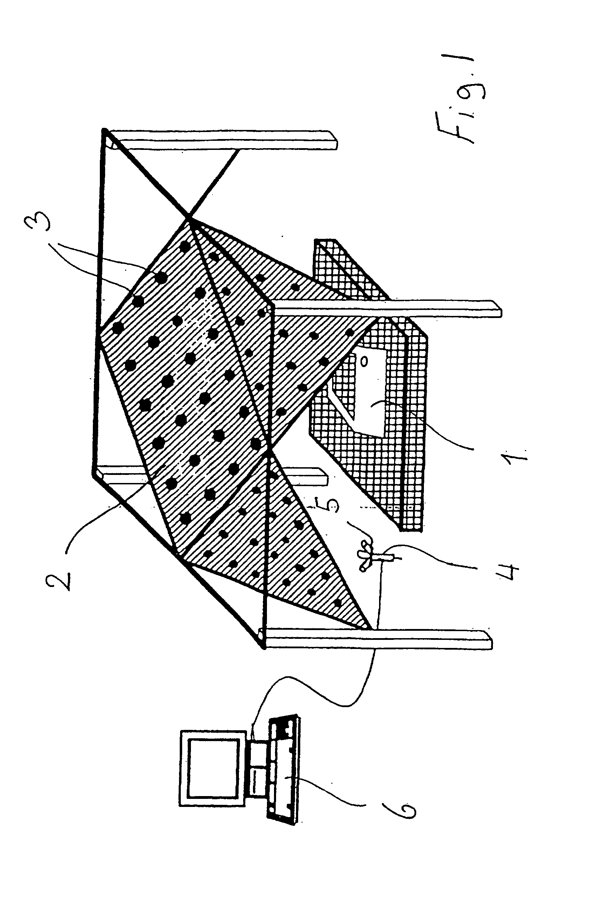

Die in Figur 1 schematisch dargestellte Anlage zur meßtechnischen räumlichen Lageerfassung von Oberflächenpunkten eines Meßobjektes 1 weist als Referenzsystem eine Targetfläche 2 auf, die als das Meßvolumen überspannender Target-Himmel ausgebildet ist und hochgenau eingemessene Referenzpunkte 3 aufweist.

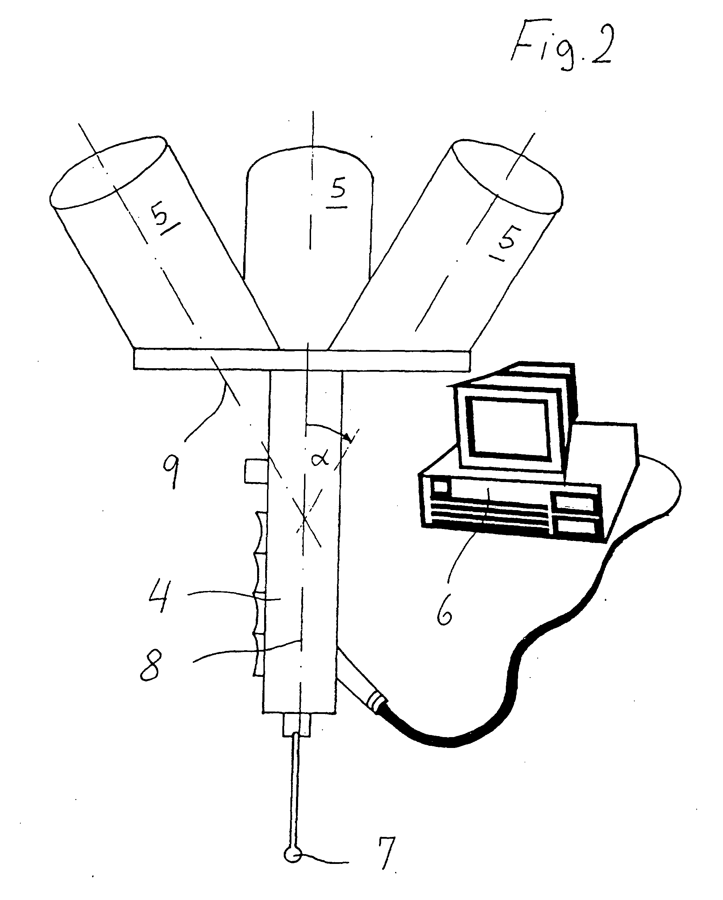

Die Anlage umfaßt ferner einen Taster 4, der an seinem oberen Endbereich mit drei elektronischen Kameras 5 bestückt ist (siehe insbesondere Figur 2), die direkt oder indirekt an einen Computer 6 angeschlossen sind. Der Taster 4 ist an seinem unteren Ende mit einer auswechselbaren Tasterspitze 7 bestückt. Die drei elektronischen Kameras 5 sind - bezogen auf eine Umfangslinie um die Tasterachse 8 - umfangsversetzt angeordnet, wobei die optische Achse 9 jeder Kamera 5 mit der Tasterachse 8 einen spitzen Winkel α einschließt, der vorzugsweise etwa 25° beträgt.

Mit der Tasterspitze 7 werden die zu vermessenden Oberflächenpunkte des Meßobjektes 1 mechanisch angetastet. Die starr am Taster 4 befestigten Kameras 5 sind auf die Targetfläche 2 und damit auf deren Referenzpunkte 3 ausgerichtet und dienen zur Ermittlung der Raumlage der Tasterspitze 7 im Antastzeitpunkt in bezug auf dieses Referenzsystem 2, 3. Der Computer 6 wertet die ihm von den Kameras 5 übermittelten Bilder aus und ermittelt mit Hilfe eines entsprechenden Berechnungsprogramms die 3D-Koordinaten der Tasterspitze 7 und damit des jeweiligen Meßpunktes.

Jede elektronische Kamera 5 ist mit einem Flächen-CCD-Chip ausgestattet, der eine Mindestgröße von 512 x 512 Pixel aufweist, aber auch jede Zwischengröße bis zu der heute maximal verfügbaren Größe von 4000 x 4000 Pixel aufweisen kann.

## Patentansprüche

1. Anlage zur meßtechnischen räumlichen 3D-Lageerfassung von Oberflächenpunkten eines zu vermessenden Objektes (Meßobjekt) in einem photogrammetrischen Onlinesystem, mit einem Taster (4) zum mechanischen Antasten eines jeweils zu vermessenden Oberflächenpunktes (Meßpunkt) mit einer Tasterspitze (7), mit zumindest einer elektronischen Kamera (5) zur Ermittlung der räumlichen 3D-Lage der Tasterspitze (7) im Antastzeitpunkt in bezug auf ein Referenzsystem (2, 3) und mit einem an die zumindest eine elektronische Kamera (5) angeschlossenen Computer (6) zur automatischen Auswertung der von der zumindest einen Kamera (5) übermittelten Bilder und zur Ermittlung der 3D-Raumkoordinaten der Tasterspitze (7) mit Hilfe eines entsprechenden Berechnungsprogrammes,
wobei die zumindest eine elektronische Kamera (5) starr mit dem Taster (4) verbunden ist, mit ihrer optischen Achse (9) mit der Tasterachse (8) einen spitzen Winkel (α) einschließt und auf die Targetfläche (2) gerichtet ist,
wobei das Referenzsystem ein ortsfest positionierter Target-Himmel (2) ist, der das Meßvolumen im Abstand zum Meßobjekt (1) vollständig überspannt und mehrere in ihrer räumlichen Lage bekannte, optisch unterscheidbare und flächenhaft verteilte Referenzpunkte (3) aufweist, die auf dem Target-Himmel (2) so dicht angeordnet sind, dass die zumindest eine Kamera (5) drei Referenzpunkte (3) gleichzeitig erfasst.

2. Anlage nach Anspruch 1, **dadurch gekennzeichnet, dass** der Taster (4) mit drei elektronischen Kameras (5) bestückt ist, die - bezogen auf eine Umfangslinie um die Tasterachse (8) - umfangsversetzt angeordnet sind, wobei die optische Achse (9) jeder Kamera (5) mit der Tasterachse (8) einen spitzen Winkel (α) einschließt.

3. Anlage nach Anspruch 2, **dadurch gekennzeichnet, dass** der spitze Winkel (α) jeweils 25° beträgt.

4. Anlage nach Anspruch 1, 2 oder 3, **dadurch gekennzeichnet, dass** die wenigstens eine elektronische Kamera (5) mit einem Flächen-CCD-Chip ausgestattet ist mit einer Mindestgröße von 512 x 512 Pixel.

5. Anlage nach einem der vorhergehenden Ansprüche, **dadurch gekennzeichnet, dass** der Taster (4) mit austauschbaren Tasterspitzen (7) unterschiedlicher Form und/oder Länge bestückbar ist.

6. Anlage nach einem der vorhergehenden Ansprüche, **dadurch gekennzeichnet, dass** bei Verwendung von drei CCD-Kameras (5) zumindest eine dieser Kameras (5) drei Referenzpunkte (3) gleichzeitig erfasst, während die beiden anderen Kameras (5) in jeder beliebigen Position jeweils zumindest zwei, vorzugsweise aber drei Referenzpunkte (3) gleichzeitig erfassen.

## Claims

1. Installation for the measured spatial 3D position detection of surface points of an object to be measured in a photogrammetric online system, having a probe (4) for mechanically touching a respective surface point to be measured (measurement point) by means of a probe tip (7), having at least one electronic camera (5) for determining the spatial 3D position of the probe tip (7) at the instant of touching with respect to a reference system (2, 3), and having a computer (6), which is connected to the at least one electronic camera (5) and serves for automatic evaluation of the images communicated by the at least one camera (5) and for determining the 3D spatial coordinates of the probe tip (7) with the aid of a corresponding calculation programme,
the at least one electronic camera (5) being rigidly connected to the probe (4), with its optical axis (9) forming an acute angle (α) with the probe axis (8) and being directed at the target area (2),
the reference system being a stationary target canopy (2), which completely spans the volume to be measured, at a distance from the object (1) to be measured, and has a plurality of reference points (3), which are known in terms of their spatial position, can be optically distinguished and are extensively distributed and are arranged on the target canopy (2) close together such that the at least one camera (5) detects three reference points (3) simultaneously.

2. Installation according to Claim 1, **characterized in that** the probe (4) is equipped with three electronic cameras (5), which are arranged such that they are peripherally offset - referring to a peripheral line about the probe axis (8) - the optical axis (9) of each camera (5) forming an acute angle (α) with the probe axis (8).

3. Installation according to Claim 2, **characterized in that** the acute angle (α) is 25° in each case.

4. Installation according to Claim 1, 2 or 3,
**characterized in that** the at least one electronic camera (5) is equipped with a planar-array CCD chip, having a minimum size of 512 x 512 pixels.

5. Installation according to one of the preceding claims, **characterized in that** the probe (4) can be equipped with exchangeable probe tips (7) having different shapes and/or lengths.

6. Installation according to one of the preceding claims, **characterized in that**, when three CCD cameras (5) are used, at least one of these cameras (5) detects three reference points (3) simultaneously, while the other two cameras (5), in any arbitrary position, respectively detect at least two, but preferably three, reference points (3) simultaneously.

## Revendications

1. Système pour la détection métrologique spatiale à 3D des points d'une surface d'un objet à mesurer (objet de mesure) dans un système photogrammétrique en ligne, comprenant un palpeur (4) pour palper mécaniquement un point de surface à mesurer (point de mesure) au moyen d'une pointe palpeuse (7), au moins une caméra électronique (5) pour fournir la position spatiale 3D de la pointe palpeuse (7) à l'instant du palpage par rapport à un système de référence (2, 3), et un ordinateur (6) raccordé à l'au moins une caméra électronique (5) pour traiter automatiquement les images transmises par l'au moins une caméra (5) et pour fournir les coordonnées spatiales 3D de la pointe palpeuse (7) à l'aide d'un programme de calcul correspondant,
dans lequel l'au moins une caméra électronique (5) est reliée rigidement au palpeur (4), forme par son axe optique (9) un angle aigu (α) avec l'axe du palpeur (8), et est orientée sur la surface cible (2),
dans lequel le système de référence est un ciel-cible (2) positionné fixement, qui recouvre complètement le volume de mesure à distance de l'objet de mesure (1) et comprend plusieurs points de référence (3) optiquement distinguables et répartis en nappe, connus en ce qui concerne leur position spatiale, ces points étant agencés sur le ciel-cible (2) avec une densité telle que l'au moins une caméra (5) capte simultanément trois points de référence (3).

2. Système selon la revendication 1, **caractérisé en ce que** le palpeur (4) est équipé de trois caméras électroniques (5) agencées avec des calages périphériques différents par rapport à une ligne périphérique autour de l'axe (8) du palpeur, l'axe optique (9) de chaque caméra (5) formant un angle aigu (α) avec l'axe du palpeur (8).

3. Système selon la revendication 2, **caractérisé en ce que** chaque angle aigu (α) est de 25°.

4. Système selon la revendication 1, 2 ou 3,
**caractérisé en ce que** l'au moins une caméra électronique (5) est équipée d'une puce CCD de surface avec une taille minimale de 512 x 512 Pixel.

5. Système selon l'une des revendications précédentes, **caractérisé en ce que** le palpeur (4) peut être équipé de pointes palpeuses interchangeables (7), de forme différente et/ou de longueur différente.

6. Système selon l'une des revendications précédentes, **caractérisé en ce que** lors de l'utilisation de trois caméras CCD (5), au moins une de ces caméras capte simultanément trois points de référence (3), tandis que les deux autres caméras (5) captent simultanément dans toute position au moins deux, mais de préférence trois points de référence (3).
